(19) Europäisches Patentamt
European Patent Office
Office européen des brevets

(11) EP 2 791 629 B1

(12) EUROPÄISCHE PATENTSCHRIFT

(45) Veröffentlichungstag und Bekanntmachung des Hinweises auf die Patenterteilung:
**12.04.2017 Patentblatt 2017/15**

(21) Anmeldenummer: **12808676.6**

(22) Anmeldetag: **07.12.2012**

(51) Int Cl.:
**G01F 1/684** *(2006.01)* **G01F 1/69** *(2006.01)*
**G01F 1/696** *(2006.01)*

(86) Internationale Anmeldenummer:
**PCT/EP2012/005051**

(87) Internationale Veröffentlichungsnummer:
**WO 2013/087174 (20.06.2013 Gazette 2013/25)**

(54) **VORRICHTUNG UND VERFAHREN ZUR BESTIMMUNG DES MASSENSTROMS EINES FLUIDS**

DEVICE AND METHOD FOR DETERMINING THE MASS-FLOW OF A FLUID

DISPOSITIF ET PROCÉDÉ POUR LA DÉTERMINATION DU DÉBIT MASSIQUE D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2011 DE 102011120899**

(43) Veröffentlichungstag der Anmeldung:
**22.10.2014 Patentblatt 2014/43**

(73) Patentinhaber: **Karlsruher Institut Für Technologie (KIT)**
**76131 Karlsruhe (DE)**

(72) Erfinder: **GROHMANN, Steffen**
**76356 Weingarten (DE)**

(56) Entgegenhaltungen:
**US-A- 4 972 707**

**Beschreibung**

Die vorliegende Erfindung betrifft eine Verwendung und ein Verfahren zur Bestimmung des Massenstroms m eines Fluids, d.h. zur Messung und/oder zur Reglung von Massenströmen von Fluiden in Leitungen. Unter Fluiden werden gasförmige Medien, flüssige Medien und Gemische von gasförmigen, flüssigen und/oder festen Komponenten ohne latente Wärme verstanden. Leitungen im Sinne der Erfindung sind Rohre und Kanäle beliebiger geschlossener Querschnittsgeometrie. Ist die spezifische Wärmekapazität $c_p$ des Fluids nicht bekannt, so ermöglicht die Erfindung die Bestimmung des Kapazitätsstroms $\dot{C} = \dot{m}c_p$ des Fluids.

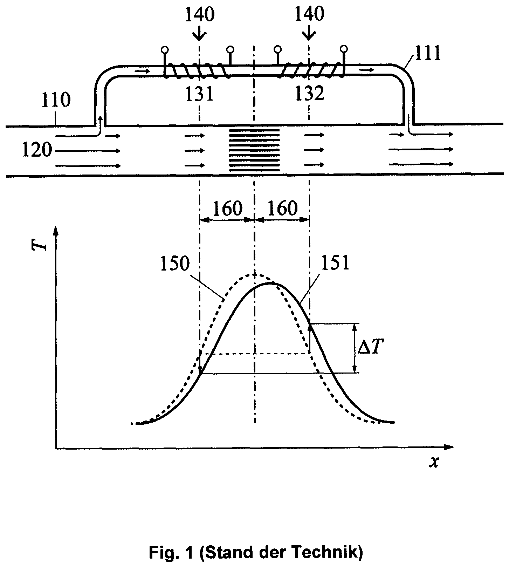

*Thermische Massenstromsensoren* oder synonym *kalorische Massenstromsensoren* basieren auf dem Prinzip, dass Wärme einem strömenden Fluid zugeführt wird. Dabei werden Wärmeübertragungsfunktionen zwischen Sensor und Fluid gemessen. Das bekannte 2-Element-Prinzip verfügt über zwei in Strömungsrichtung nacheinander angeordnete Elemente, die sowohl die Heizfunktion als auch die Aufgabe der Temperaturmessung erfüllen. Sie sind auf einer wärmeleitenden durchströmten Leitung montiert, werden elektrisch beheizt und vom strömenden Fluid gekühlt. Werden beide Elemente mit derselben Leistung beheizt, so weist die Leitung bei ruhendem Fluid ein symmetrisches Temperaturprofil um die Elemente auf, d.h. die Temperaturdifferenz zwischen den Elementen ist theoretisch gleich Null (siehe gestrichelte Linie in Fig. 1). Strömt das Fluid hingegen durch die Leitung, so verschiebt sich das Temperaturprofil in Strömungsrichtung. Dabei wird eine Temperaturdifferenz $\Delta T$ der Elemente gemessen, die dem Massenstrom proportional ist (siehe durchgezogene Linie in Fig. 1). Beim 3-Element-Prinzip sind die Heiz- und Temperatur-Messfunktionen getrennt. Dabei werden ein oder mehrere Heizelemente möglichst zentrisch zwischen zwei stromaufwärts und stromabwärts befindlichen Temperatursensoren angeordnet. Die gemessene Temperaturdifferenz ist wiederum ein Maß für den Massenstrom.

Bei thermischen Massenstromsensoren ist der tatsächliche Zusammenhang zwischen dem Massenstrom und der gemessenen Temperaturdifferenz komplex. Einflussgrößen sind insbesondere die konstruktive Gestaltung (Abstand der Sensoren, Größe und Form der Wärmeübertragungsflächen, axiale und radiale Wärmeleitwiderstände, Kontaktwiderstände), die Strömungsbedingungen des Fluids, die Fluideigenschaften (Viskosität, Wärmeleitfähigkeit, spezifische Wärmekapazität), die Einbaulage des Sensors und die Umgebungsbedingungen. Der funktionale Zusammenhang zwischen der gemessenen Temperaturdifferenz und dem Massenstrom wird deshalb durch Mehrpunktkalibrierung empirisch ermittelt und in Form von sensorspezifischen Kennlinien hinterlegt. Es ist eine Vielzahl thermischer Massenstromsensoren bekannt, bei denen die Fehlerquellen des Messprinzips mit unterschiedlichen technischen Mitteln begrenzt oder eliminiert werden.

In der US 4,517,838 A, US 5,347,861 A, US 5,373,737 A und der EP 0 395 126 A1 sind Sensoren beschrieben, bei denen die Messung wie in Fig. 1 in einem U-förmigen Bypass zu der durchströmten Leitung erfolgt. Die US 4,517,838 A, US 5,347,861 A und die US 5,373,737 A beschreiben dabei Sensoren nach dem 2-Element-Prinzip. In der US 4,517,838 A ist das Sensorrohr von einem dünnen Spalt umgeben, wodurch der Effekt der Einbaulage reduziert und die Zeitkonstante verkürzt wird. Die US 5,347,861 A löst die gleichen Ziele durch eine beheizte thermische Brücke über das Sensorrohr. Die US 5,373,737 A offenbart eine aktive Kühlplatte zur Unterdrückung des Einflusses der Umgebungstemperatur. In der EP 0 395 126 A1 wird dagegen das 3-Element-Prinzip eingesetzt. Die Anfangs- und Endtemperaturen des Bypasses werden durch starke thermische Kopplung gleich gehalten; zur Kompensation der Nullpunktabweichung kommt ein zweigeteiltes Heizelement zur Anwendung. Die Temperaturdifferenzmessung erfolgt derart, dass Thermoelemente oder Thermosäulen die Temperaturmessstellen stromauf- und stromabwärts des Heizelements direkt verbinden.

In der US 7,895,888 B2 sind Heizer- und Temperatursensorchips beschrieben, die auf der Oberfläche kleiner Rohrleitungen befestigt sind und nach dem 3-Element-Prinzip funktionieren. Zur Erweiterung des Messbereichs sind mehrere Temperatursensorpaare in unterschiedlichem Abstand symmetrisch zum zentralen Heizerchip angeordnet.

In der EP 0 137 687 A1, DE 43 24 040 A1, US 7,197,953 B2 und der WO 2007/063407 A2 sind Sensoren nach dem 3-Element-Prinzip beschrieben, die mittels Siliziumtechnologie hergestellt und in Strömungskanäle integriert oder eingeführt werden. Bei der EP 0 137 687 A1 wird die Messung in einem oder in mehreren Bypässen durchgeführt. Die DE 43 24 040 A1 setzt zur Kompensation der Temperaturabhängigkeit der Kennlinie zusätzliche Heizer- und Medientemperaturfühler ein, wobei die Heizertemperatur bei veränderlichem Massenstrom konstant geregelt und der Medientemperatur über eine stoffwertabhängige Kennlinie nachgeführt wird. In der US 7,197,953 B2 sind Pt-Dünnschichtsensoren zur Temperaturmessung in Kombination mit spezifischen Korrelationen zur Verbesserung der Messgenauigkeit dokumentiert. Die WO 2007/063407 A2 beschreibt die gezielte Verteilung der Heizenergie durch wärmeleitendes Material, um die systematischen Effekte infolge niedrigerer Temperaturdifferenzen zu verringern. In der WO 01/14839 A1 ist ein Sensor beschrieben, dessen Heizelement gepulst betrieben wird. Der Massenstrom wird aus dem zeitlichen Verlauf des Heiz- und Abkühlvorgangs am Sensor bestimmt.

Die DE 689 03 678 T2 offenbart eine Vorrichtung zur Messung des Durchflusses in Flüssigkeiten. Hierbei ist ein Heizelement in einem ersten Block angeordnet ist, um dessen Temperatur gegenüber einem zweiten Block zu erhöhen, wobei ein Rohr über die gesamte Länge mit einer Metallfolie versehen ist. Die Metallfolie und das Rohr sorgen dafür, dass eine zugeführte Heizenergie vom ersten Block zum zweiten Block fließt, so dass der ganze Bereich als Wärmeübertrager fungiert. Hieraus ergibt sich ein in Strömungsrichtung linearer Temperaturverlauf des Wärmeübertragers, wobei die Temperatur des Wärmeübertragers stromaufwärts in Strömungsrichtung zunimmt.

Die US 4 817 427 A offenbart eine Vorrichtung zur Messung des Wasserstroms in Pflanzenstämmen. Über einen Hauptheizer zugeführte Energie fließt hierbei in Form von vier verschiedenen Wärmeströmen ab. Um hierbei die Summe von drei der vier Wärmeströme konstant zu halten, ohne deren Einzelwerte exakt bestimmen zu müssen, werden bei variierenden Wasserströmen Zusatzheizer eingesetzt, deren Regelung über Temperaturgradienten in den jeweiligen Abschnitten erfolgt, die mit Thermoelementen erfasst wird. Über Kupferfolien wird eine Homogenisierung der Oberflächentemperatur des Hauptheizers erreicht.

J. H. Huijsing et al, beschreiben in Thermal mass-flow meter J. Phys. E 21, 1988, S. 994-997, eine Vorrichtung zur thermischen Messung des Massendurchflusses, die drei Kupferblöcke aufweist, die über den Strömungsquerschnitt angeordnet sind, wobei das Fluid durch Löcher in den Kupferblöcken hindurchströmt. Die Zufuhr einer Heizleistung erfolgt über den mittleren Kupferblock. Diese Anordnung sorgt dafür, dass sich die Heizleistung gleichmäßig über den Strömungsquerschnitt verteilt. Das Messprinzip basiert auf der Temperaturänderung des Fluidstroms durch die zugeführte Heizleistung, wobei das Temperaturprofil des Heizers in Strömungsrichtung keine Rolle spielt. US4972707 beschreibt eine Vorrichtung zur thermische Messung des Durchflusses eines Fluids. Die Aufgabe der vorliegenden Erfindung besteht darin, die aufgeführten Nachteile und Einschränkungen des Stands der Technik zu überwinden. Insbesondere sollen eine Verwendung und ein Verfahren zur Bestimmung des Massenstroms eines Fluids bereitgestellt werden, die eine möglichst einfache und gleichzeitig genaue Bestimmung des Massen- oder Kapazitätsstroms eines Fluids in einer Leitung erlauben.

Die Lösung dieser Aufgabe erfolgt im Hinblick auf das Verfahren zur Bestimmung des Massenstroms eines Fluids durch die Merkmale des Anspruchs 1 und im Hinblick auf die Verwendung zur Bestimmung des Massenstroms eines Fluids durch die Schritte des Anspruchs 5 Die Unteransprüche beschreiben jeweils vorteilhafte Ausgestaltungen. Die vorliegende Erfindung unterscheidet sich grundlegend vom Messprinzip bekannter thermischer Massenstromsensoren. In thermischen Massenstromsensoren werden sensorspezifische Kennlinien eingesetzt, um einen empirischen Zusammenhang zwischen gemessener Temperaturdifferenz der Leitung und dem zu bestimmenden Massenstrom herzustellen. Dabei wird versucht, vielfältige Fehlereinflüsse durch diverse Ansätze zu begrenzen.

Im Gegensatz hierzu stellt eine Vorrichtung einen Sensortyp dar und das erfindungsgemäße Verfahren macht von analytischen, d.h. physikalisch exakten Beziehungen Gebrauch, um den Massenstrom - und optional auch die systematischen Fehler der Messgrößen - durch eine intrinsische Kalibrierung zu bestimmen. Auf diese Weise werden die gewonnenen Messgrößen von systematischen Fehlern bereinigt. Werden mit dem erfindungsgemäßen Verfahren auch die systematischen Fehler der Messgrößen exakt bestimmt, kann der Massenstrom im gesamten Messbereich aus der Energiebilanz des strömenden Fluids ermittelt werden. Die tatsächliche Größe der systematischen Fehler spielt, abgesehen von numerischen Beschränkungen, bei ihrer Bestimmung keine Rolle, d.h. es sind keine aufwendigen Methoden zur Begrenzung von Fehlereinflüssen erforderlich.

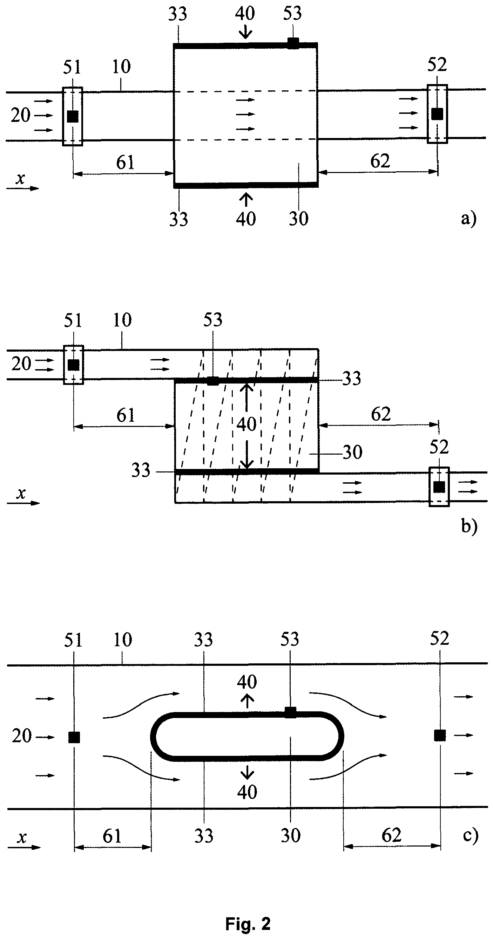

In einer bevorzugten Ausgestaltung weist die Vorrichtung eine Leitung auf, die von einem Fluid durchströmt wird (siehe Fig. 2a). Das in der Leitung strömende Fluid wird derart durch einen beheizten Wärmeübertrager geführt, dass der Wärmeübertrager das Fluid bzw. die Leitung umgibt. In einer bevorzugten Ausführungsvariante handelt es sich bei dem Wärmeübertrager um einen elektrisch beheizbaren Kupferblock mit hoher Wärmeleitfähigkeit, der auf einem Edelstahlrohr aufgelötet ist.

In einer alternativen Ausgestaltung ist die Leitung derart um den Wärmeübertrager angeordnet, dass das Fluid in der Leitung um den Wärmeübertrager strömt (siehe Fig. 2b).

In einer weiteren Ausgestaltung, in der sich der Wärmeübertrager im Inneren der Leitung befindet, umströmt das Fluid den Wärmeübertrager direkt (siehe Fig. 2c).

Der Wärmeübertrager ist so ausgeführt, dass er über eine in Strömungsrichtung konstante Oberflächentemperatur verfügt. Die Heizleistung, die dem Wärmeübertrager zugeführt wird, ist vorzugsweise regelbar. Stromaufwärts und stromabwärts des Wärmeübertragers befinden sich Temperaturmessstellen, mit denen die Fluidtemperaturen gemessen werden.

In einer bevorzugten Ausgestaltung sind die Temperaturmessstellen in beliebigen Abständen vom Wärmeübertrager angeordnet; im Gegensatz zu thermischen Massenstromsensoren ist eine symmetrische Anordnung um den Wärmeübertrager nicht erforderlich.

In einer besonderen Ausgestaltung sind die Temperaturmessstellen im Falle, in dem der Wärmeübertrager nicht im Inneren der Leitung eingebracht ist, im Gegensatz zu thermischen Massenstromsensoren in so großen Abständen vom Wärmeübertrager auf der Leitung angebracht, in denen die Rippenwirkungsgrade der Leitung und/oder die radialen Temperaturprofile im Fluid vernachlässigbar klein sind. Ein vernachlässigbarer Rippenwirkungsgrad der Leitung bedeutet, dass die Temperaturerhöhung durch axiale Wärmeleitung in der Leitungswand, ausgehend vom Wärmeübertrager als Wärmequelle, vernachlässigbar klein ist.

In einer besonderen Ausgestaltung sind die erste und die zweite Temperaturmessstelle jeweils bevorzugt fest mit einem Kontaktelement verbunden, wobei das erste Kontaktelement stromaufwärts in Bezug auf den Wärmeübertrager die Leitung umgibt und/oder das zweite Kontaktelement stromabwärts in Bezug auf den Wärmeübertrager die Leitung umgibt.

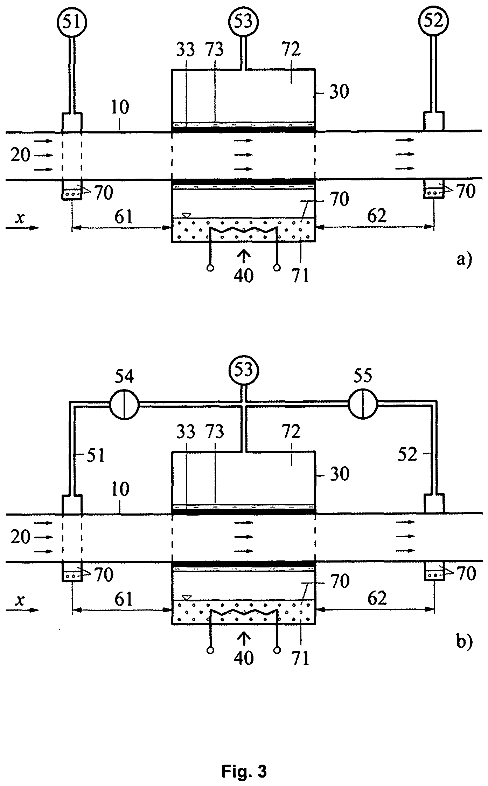

In einer besonderen Ausgestaltung ist der Wärmeübertrager von einem gesättigten Medium umgeben, dass sich im Phasengleichgewicht aus siedender Flüssigkeit und gesättigten Dampf befindet, wodurch die in Strömungsrichtung konstante Oberflächentemperatur über die Sättigungstemperatur des auf der Oberfläche der Leitung kondensierenden Mediums erreicht wird und im Gleichgewichtszustand die kondensierte Flüssigkeitsmenge durch die mit dem Heizer zugeführte Wärme in dem geschlossenen Volumen wieder verdampft wird. Dabei wird die der Sättigungstemperatur entsprechende konstante Oberflächentemperatur durch die Messung des Dampfdrucks bestimmt. Die Temperaturmessstellen für die Fluidtemperaturen sind ebenfalls als Dampfdruckthermometer ausgeführt, die mit dem gleichen Medium wie der Wärmeübertrager befüllt sind, so dass die Eintrittstemperaturdifferenz $\Delta T'$ und die Austrittstemperaturdifferenz $\Delta T''$ des Wärmeübertragers jeweils durch eine Differenzdruckmessung bestimmt werden können (siehe Fig. 3).

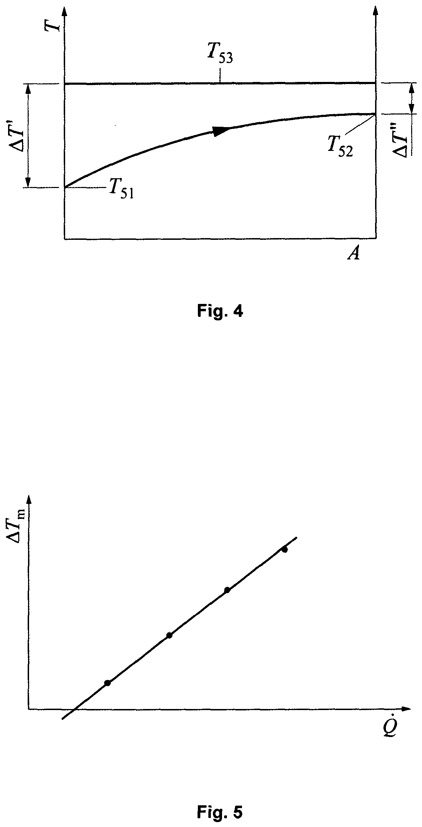

Zum Verständnis des erfindungsgemäßen Verfahrens wird auf das in Fig. 4 schematisch dargestellte Temperatur-Flächen-Diagramm des Wärmeübertragers zurückgegriffen. Danach werden $\Delta T'$ und $\Delta T''$ durch Temperaturdifferenzmessung zwischen der konstanten Oberflächentemperatur des Wärmeübertragers und den Fluidtemperaturen sowohl an einer ersten Temperaturmessstelle als auch an einer zweiten Temperaturmessstelle bestimmt, vorzugsweise mit Dampfdruckthermometern, Widerstandsthermometern, Thermoelementen oder Thermosäulen. Zusammen mit der regelbaren Heizleistung $\dot{Q}$ ergeben sich hieraus die drei Messgrößen $\dot{Q}$, $\Delta T'$ und $\Delta T''$.

Aus den drei Messgrößen $\dot{Q}$, $\Delta T'$ und $\Delta T''$ lassen sich zwei Energiebilanzen aufstellen, zum einen die Energiebilanz des strömenden Fluids, zum anderen die Energiebilanz des Wärmeübertragers. Aus den zwei Energiebilanzen lassen sich zwei analytische Funktionen für den Massenstrom ableiten. Die Funktion A für den Massenstrom ergibt sich vorzugsweise durch Umstellung der Energiebilanz des strömenden Fluids. Die Funktion B für den Massenstrom wird bevorzugt durch Gleichsetzen der beiden Energiebilanzen unter Anwendung des Energieerhaltungssatzes und anschließendes Auflösung nach dem Massenstrom erhalten.

Die drei Messgrößen $\dot{Q}$, $\Delta T'$ und $\Delta T''$ sind generell mit ihrem jeweiligen systematischen Fehler $F_{\dot{Q}}$, $F_{\Delta T'}$ und $F_{\Delta T''}$ behaftet. Die Ergebnisse für den Massenstrom nach Funktion A und nach Funktion B weichen deshalb ohne Korrektur der Messgrößen voneinander ab, d.h. es ergeben sich verschiedene systematische Effekte. Allerdings basieren die beiden analytischen Funktionen A und B ausschließlich auf denselben Variablen $\dot{Q}$, $\Delta T'$ und $\Delta T''$ sowie der spezifischen Wärmekapazität $c_p$ des Fluids. Deshalb müssen die Ergebnisse der Funktiönen A und B unter der Bedingung übereinstimmen, dass die drei Variablen der Funktionen frei von Fehlern sind. Aus dieser Bedingung lassen sich sowohl der Massenstrom, als auch die systematischen Fehler der Messgrößen durch eine intrinsische Kalibrierung des Sensors exakt bestimmen.

Das erfindungsgemäße Verfahren weist somit die Verfahrensschritte a) bis c) auf:

- Gemäß Schritt a) wird eine Messreihe $\{\dot{Q}_i, \Delta T'_i, \Delta T''_i\}_{i=1...n}$ mit $n \geq 2$ Messpunkten bei einem konstantem Massenstrom $\dot{m}$ und konstanter Temperatur des Fluids an der ersten Temperaturmessstelle aufgenommen, wobei dem Fluid bei jedem Messpunkt mittels des Wärmeübertragers eine Heizleistung $\dot{Q}$ aufgebracht wird, die in Bezug zu den vorherigen Messpunkten verändert wurde.

- Gemäß Schritt b) werden die n Datensätze den Funktionen A und B übergeben und jeweils mit den systematischen Fehlern $F_{\dot{Q}}$, $F_{\Delta T'}$ und $F_{\Delta T''}$ erweitert, wobei als erste Funktion A für den Massenstrom die Funktion

$$\dot{m}_A\big(\dot{Q},\ \Delta T',\ \Delta T''\big) := \frac{\dot{Q}}{c_p\,(\Delta T' - \Delta T'')}\ .$$

und als zweite Funktion B für den Massenstrom die weitere Funktion

$$\dot{m}_B\big(\dot{Q},\ \Delta T',\ \Delta T''\big) := \frac{1}{R\,c_p\,\ln\frac{\Delta T'}{\Delta T''}}\ \text{mit}\ R = f(\dot{Q},\ \Delta T',\ \Delta T'')$$

gewählt wird, wobei $R$ der Anstieg der Funktion $\Delta T_m = \dfrac{\Delta T' - \Delta T''}{\ln\frac{\Delta T'}{\Delta T''}} = f(\dot{Q})$ ist, der durch lineare Approximation der Messdaten bestimmt wird, und $\ln\frac{\Delta T'}{\Delta T''}$ den natürlichen Logarithmus des Quotienten aus $\Delta T'$ und $\Delta T''$ bezeichnet.

Die so gebildeten Funktionen A und B werden schließlich zu einer gemeinsamen Datenmenge zusammengefügt.

- Gemäß Schritt c) werden die systematischen Fehler als freie Fitparameter einer Fitfunktion bestimmt, in der die Streuung, vorzugsweise die Standardabweichung der Datenmenge minimiert wird. Die Fitfunktion liefert den konstanten Massenstrom $\dot{m}$, dessen Genauigkeit nur von statistischen Unsicherheiten abhängt. Es ergeben sich jedoch beliebige Kombinationen der drei Fitparameter $F_{\dot{Q}}$, $F_{\Delta T'}$ und $F_{\Delta T''}$, da das Gleichungssystem mit zwei Gleichungen und drei Unbekannten unterbestimmt ist.
- In einer bevorzugten Ausgestaltung wird daher das erfindungsgemäße Verfahren im Anschluss an Schritt c) um die beiden weiteren Verfahrensschritte d) und e) erweitert:
- Gemäß Schritt d) wird die Fitfunktion mit einer dritten unabhängigen Funktion C erweitert, um die Werte der systematischen Fehler $F_{\dot{Q}}$, $F_{\Delta T'}$ und $F_{\Delta T''}$ exakt zu bestimmen.
- Gemäß Schritt d) wird der Massenstrom im Standardbetrieb der Vorrichtung, d.h. im gesamten Messbereich mit den von den systematischen Fehlern bereinigten Messgrößen aus der Energiebilanz des strömenden Fluids nach Funktion A berechnet.

Die vorliegende Erfindung weist insbesondere die folgenden Vorteile auf:

- Ein wesentlicher Vorteil der vorliegenden Erfindung ist die Möglichkeit der intrinsischen Kalibrierung, d.h. der Eigenkalibrierung der erfindungsgemäßen Vorrichtung (Sensor) ohne vergleichendes Normal.
- Die Durchführung der intrinsischen Kalibrierung mit mindestens 3 Datenpunkten ermöglicht die Verifizierung der stationären Bedingungen über die Linearität der Beziehung $\Delta T_m = f(\dot{Q})$.
- Die exakte Bestimmung des Massen- oder Kapazitätsstroms ist unter Anwendung der Verfahrensschritte a) bis c) unter stationären Bedingungen jederzeit möglich. Die Messunsicherheit hängt nur von statistischen Unsicherheiten ab; sie kann mit zunehmender Messzeit verringert werden.
- Die Messunsicherheit des Massen- oder Kapazitätsstroms kann unmittelbar aus der Messung selbst angegeben werden. Sie entspricht bei der intrinsischen Kalibrierung der verbleibenden Standardabweichung der Fitfunktion. Im Standardbetrieb wird die Messunsicherheit mit den statistischen Unsicherheiten der Messgrößen nach dem Fehlerfortpflanzungsgesetz aus Funktion A berechnet.
- Das erfindungsgemäße Verfahren erlaubt die Kalibrierung zu jeder Zeit und an jedem Ort, insbesondere im eingebauten Zustand in einer Anlage unter realen Betriebsbedingungen. Dies ist besonders vorteilhaft bei

  ◦ speziellen Einsatzbedingungen, insbesondere bei sehr tiefen oder sehr hohen Temperaturen, bei denen der technische Aufwand zur werksseitigen Kalibrierung zu hoch wäre;
  ◦ der Nachkalibrierung eines Sensors bei Verschmutzung, bei langen Betriebszeiten oder nach besonderen Belastungen, vor allem nach unzulässigen Spannungen oder zu hohen Temperaturen bei einem Störfall; und
  ◦ Systemen, in denen die Vorrichtung zusammen mit anderen Komponenten integriert ist, insbesondere in miniaturisierten Systemen.

- Eine Konstanz oder eine Veränderung der systematischen Fehler kann durch den Sensor selbst diagnostiziert werden, indem Ergebnisse aus dem Standardbetrieb nach Verfahrensschritt e) und aus dem Kalibrierbetrieb nach den Verfahrensschritten a) bis c) periodisch verglichen werden. Falls erforderlich, lassen sich die systematischen Fehler unter Anwendung von Verfahrensschritt d) neu bestimmen, insbesondere bei stark veränderlichen Umgebungsbedingungen.
- In Fällen, in denen die exakte Bestimmung der systematischen Fehler nach dem Verfahrensschritt d) nicht durchgeführt wird, werden während des Betriebs für einen Betriebsbereich der Vorrichtung Kennlinien und/oder Kennfelder erstellt, die sich auf intrinsische Kalibrierungen nach den Verfahrensschritten a) bis c) bei jeweils unterschiedlich gewählten Betriebsbedingungen stützen.
- Durch Einfügung eines nachgeschalteten Regelventils lässt sich die Vorrichtung als Massenstromregler einsetzen. Der besondere Vorteil dieser Konfiguration besteht darin, dass sich zwei Messreihen bei unterschiedlichem Massenstrom durch den Massenstromregler selbst realisieren lassen, um die systematischen Fehler nach den Verfahrensschritten a) bis d) exakt zu bestimmen.
- Im Gegensatz zu thermischen Massenstromsensoren ist die Minimierung der systematischen Fehler der Messgrößen nicht erforderlich. Dadurch lässt sich der Aufbau der Vorrichtung wesentlich vereinfachen.
- Die Vorrichtung erlaubt die Bestimmung des Massen- oder Kapazitätsstroms bei wesentlich niedrigeren Temperaturdifferenzen im Vergleich zu thermischen Massenstromsensoren, vorzugsweise im Bereich von $(\Delta T - \Delta T'') < 1$ K. Dadurch ist eine Messung des Massenstroms entweder im Bypass und/oder direkt im Hauptstrom des Fluids möglich, ohne dass die zu bestimmende Strömung beeinflusst wird.

Im Folgenden wird die Erfindung anhand von Ausführungsbeispielen und den Figuren näher erläutert. Hierbei zeigen im Einzelnen:

Fig. 1     Schematischer Aufbau und Funktionsweise eines thermischen Massenstromsensors gemäß dem Stand der Technik;

Fig. 2     Schematischer Aufbau einer Vorrichtung in drei vorteilhaften Ausführungen **a) bis c)**;

Fig. 3     Schematischer Aufbau einer Vorrichtung in zwei weiteren Ausführungen **a) und b)**;

Fig. 4     Temperatur-Flächen-Diagramm einer Vorrichtung;

Fig. 5     Linearer Zusammenhang zwischen den Messgrößen $\dot{Q}$ und $\Delta T_{\mathrm{m}} = f(\Delta T'; \Delta T'')$;

Fig. 6     Systematische Effekte der Funktionen A und B;

Fig. 7     Messergebnisse einer Vorrichtung mit Fehlerbalken; und

Fig. 8     Hieraus ermittelte Werte für den Massenstrom;

Fig. 9     Schematischer Aufbau einer weiteren Ausführung.

In **Fig. 1** ist ein thermischer Massenstromsensor dargestellt, wie er aus dem Stand der Technik bekannt ist. In dieser Ausgestaltung erfolgt die Messung in einem U-förmigen Bypass (111) der vom Fluid (120) durchströmten Leitung (110). Das dargestellte 2-Element-Prinzip verfügt über zwei in Strömungsrichtung nacheinander angeordnete Elemente (131, 132), die sowohl die Heizfunktion, als auch die Aufgabe der Temperaturmessung erfüllen. Sie sind auf dem wärmeleitenden Bypass (111) montiert, werden jeweils mit der elektrischen Leistung (140) beheizt und von einem Teilstrom des strömenden Fluids (120) gekühlt. Werden beide Elemente (131, 132) mit der gleichen Leistung (140) beheizt, so weist der Bypass (111) bei stehendem Fluid (120) ein symmetrisches Temperaturprofil (150) in Bezug auf die Positionen (160) der Elemente (131, 132) auf, d.h. die Temperaturdifferenz zwischen den Elementen (131, 132) ist theoretisch gleich Null. Strömt ein Teilstrom des Fluids (120) hingegen durch den Bypass (111), so bildet sich das in Strömungsrichtung $x$ verschobene Temperaturprofil (151). Dabei wird eine Temperaturdifferenz $\Delta T$ zwischen den Elementen (131, 132) gemessen, die dem Massenstrom proportional ist.
**Fig. 2** zeigt schematisch den Aufbau einer Vorrichtung in drei unterschiedlichen Ausgestaltungen.
Die Vorrichtung gemäß **Fig. 2a)** weist eine Leitung (10) auf, die von einem Fluid (20) durchströmt wird. Das in der Leitung (10) strömende Fluid (20) wird derart durch einen beheizten Wärmeübertrager (30) geführt, dass der Wärmeübertrager (30) das Fluid (20) und die Leitung (10) umschließt.
In einer zweiten Ausgestaltung gemäß **Fig. 2b)** ist die Leitung (10) um den Wärmeübertrager (30) angeordnet, so dass das Fluid (20) in der Leitung (10) um den Wärmeübertrager (30) strömt.
**Fig. 2c)** zeigt eine dritte Ausgestaltung, in der sich der Wärmeübertrager (30) im Inneren der Leitung (10) befindet, so dass das Fluid (20) den Wärmeübertrager (30) direkt umströmt. Der Wärmeübertrager (30) ist in allen Ausgestaltungen derart ausgeführt, dass er über eine in Strömungsrichtung $x$ konstante Oberflächentemperatur (33) verfügt. Die Heizleistung (40), die dem Wärmeübertrager (30) zugeführt wird, ist regelbar. Die Oberflächentemperatur (33) des Wärmeübertragers (30) wird an einer dritten Temperaturmessstelle (53) erfasst. Stromaufwärts und stromabwärts des Wärmeübertragers (30) befinden sich die erste Temperaturmessstelle (51) und die zweite Temperaturmessstelle (52), mit denen die zugehörigen Fluidtemperaturen ermittelt werden. In den Ausgestaltungen gemäß **Fig. 2a) und Fig. 2b)** werden die erste und zweite Temperaturmessstelle (51, 52) im Gegensatz zu thermischen Massenstromsensoren in so großen Abständen (61, 62) vom Wärmeübertrager (30) auf der Leitung (10) angeordnet, in denen die Rippenwirkungsgrade der Leitung (10) und die radialen Temperaturgradienten des Fluids (20) vernachlässigbar klein sind. In einer bevorzugten Ausgestaltung sind die Temperaturmessstellen (51, 52) in ansonsten beliebigen Abständen (61, 62) vom Wärmeübertrager (30) angeordnet, d.h. im Gegensatz zu thermischen Massenstromsensoren ist eine symmetrische Anordnung um den Wärmeübertrager (30) nicht notwendig.
In der Ausführung nach **Fig. 3** verfügt der Wärmeübertrager (30) über ein geschlossenes Volumen, das mit einem gesättigten Medium (70) befüllt ist. Das Medium (70) befindet sich im Phasengleichgewicht aus siedender Flüssigkeit (71) und gesättigten Dampf (72), wodurch die in Strömungsrichtung konstante Oberflächentemperatur (33) über die Sättigungstemperatur des auf der Oberfläche der Leitung (10) kondensierenden Mediums (73) erreicht wird und im Gleichgewichtszustand die kondensierte Flüssigkeitsmenge durch die mit dem Heizer zugeführte Wärme (40) in dem geschlossenen Volumen wieder verdampft wird. Dabei wird die der Sättigungstemperatur entsprechende konstante Oberflächentemperatur (33) durch die Messung des Dampfdrucks (53) bestimmt. Die Temperaturmessstellen (51) und (52) für die Fluidtemperaturen sind vorzugsweise ebenfalls als Dampfdruckthermometer ausgeführt, die mit dem gleichen Medium (70) wie der Wärmeübertrager (30) befüllt sind. Nach **Fig. 3a** können die Temperaturdifferenzen $\Delta T'$ und $\Delta T''$ aus den Dampfdruckmessungen (51) und (52) in Bezug auf die Dampfdruckmessung (53) bestimmt werden. In einer alternativen Ausführung lassen sich nach **Fig. 3b** die Temperaturdifferenzen $\Delta T'$ und $\Delta T''$ jeweils durch eine Differenzdruckmessung an zwei Differenzdruckmessstellen (54, 55) bestimmen, wobei die Druckmessung (53) den Zusammenhang zwischen Sättigungsdruck und Sättigungstemperatur über die Dampfdruckkurve des Mediums (70) liefert.

Für alle Ausgestaltungen, einschließlich den in **Fig. 2** und **Fig. 3** dargestellten Ausführungen, wird dasselbe Verfahren zur Bestimmung eines Massenstroms eingesetzt. **Fig. 4** zeigt das zugehörige Temperatur-Flächen-Diagramm des Wärmeübertragers (30). Danach werden die Eintrittstemperaturdifferenz $\Delta T'$ und die Austrittstemperaturdifferenz $\Delta T''$ des Wärmeübertragers (30) durch Temperaturdifferenzmessung zwischen der konstanten Oberflächentemperatur des Wärmeübertragers (30), die an der dritten Temperaturmessstelle (53) erfasst wird, und den Fluidtemperaturen an den beiden anderen Temperaturmessstellen (51, 52) bestimmt, vorzugsweise mit Dampfdruckthermometern, Widerstandsthermometern, Thermoelementen oder Thermosäulen. Zusammen mit der regelbaren Heizleistung $\dot{Q}$ (40)·ergeben sich drei Messgrößen $\dot{Q}$, $\Delta T'$ und $\Delta T''$.

Aus den drei Messgrößen $\dot{Q}$, $\Delta T'$ und $\Delta T''$ lassen sich zwei Energiebilanzen aufstellen. Als erste Bilanz wurde die Energiebilanz des strömenden Fluids (20) gewählt:

$$\dot{Q} = \dot{m} \; c_{\mathrm{p}} \; (\Delta T' - \Delta T'') \, . \tag{1}$$

Darin sind $\dot{Q}$ die regelbare Heizleistung (40), $\dot{m}$ der Massenstrom des Fluids (20), $c_{\mathrm{p}}$ die spezifische Wärmekapazität des Fluids (20), sowie $\Delta T'$ und $\Delta T''$ die Ein- und Austrittstemperaturdifferenzen des Wärmeübertragers (30). Der Faktor $\dot{m} \, c_{\mathrm{p}}$ ist auch als Kapazitätsstrom $\dot{C}$ des Fluids (20) bekannt.

Als zweite Bilanz wurde die Energiebilanz des Wärmeübertragers (30) gewählt:

$$\dot{Q} = k \, S \, \Delta T_{\mathrm{m}} = \frac{1}{R} \, \Delta T_{\mathrm{m}} = \frac{1}{R} \, \frac{\Delta T' - \Delta T''}{\ln \frac{\Delta T'}{\Delta T''}} \, . \tag{2}$$

Darin sind $k$ der Wärmedurchgangskoeffizient, bezogen auf die Wärmeübertragerfläche S, und $\Delta T_{\mathrm{m}}$ die mittlere logarithmische Temperaturdifferenz des Wärmeübertragers (30). Die Variablen $k$ und $S$ können zum thermischen Widerstand $R$ des Wärmeübertragers (30) zusammengefasst werden. Der Ausdruck für die mittlere logarithmische Temperaturdifferenz $\Delta T_m$ ist eine analytische Beziehung, deren Herleitung der Fachliteratur entnommen werden kann.

Der thermische Widerstand $R$ hängt von den inneren thermischen Widerständen des Wärmeübertragers (30) ab sowie vom Wärmeübergangswiderstand zum Fluid (20). Der Wärmeübergangswiderstand ist bei laminarer Strömung konstant, wird aber bei turbulenter Strömung von dem zu messenden Massenstrom über die Reynolds-Zahl beeinflusst. Eine Berechnung von $R$ scheidet damit generell aus. Unter stationären Bedingungen lässt sich $R$ jedoch leicht bestimmen, da bei konstantem Massenstrom $\dot{m}$ auch $R$ eine Konstante ist. Führt man eine Messreihe mit stufenweiser Änderung der Heizleistung $\dot{Q}$ durch, so ergibt sich nach Gleichung (2) ein linearer Zusammenhang zwischen den Messgrößen $\dot{Q}$ und $\Delta T_{\mathrm{m}} = f(\Delta T'; \Delta T'')$, wobei $R$ der Anstieg der Funktion ist, der durch lineare Approximation der Messdaten bestimmt werden kann (siehe **Fig. 5**):

$$R = f\big(\dot{Q}, \; \Delta T', \; \Delta T''\big) \, . \tag{3}$$

Aus den beiden Energiebilanzen lassen sich zwei analytische Funktionen für den Massenstrom ableiten. Die hier gewählte Funktion A für den Massenstrom ergibt sich durch Umstellung von Gleichung (1):

$$\dot{m}_{\mathrm{A}}\big(\dot{Q}, \; \Delta T', \; \Delta T''\big) := \frac{\dot{Q}}{c_{\mathrm{p}} \, (\Delta T' - \Delta T'')} \, . \tag{4}$$

Die hier gewählte Funktion B für den Massenstrom erhält man durch Gleichsetzen der Gleichungen (1) und (2) unter Anwendung des Energieerhaltungssatzes, und anschließender Auflösung nach dem Massenstrom:

$$\dot{m}_{\mathrm{B}}\left(\dot{Q},\ \Delta T',\ \Delta T''\right) := \frac{1}{R(\dot{Q},\Delta T',\Delta T'')\, c_{\mathrm{p}}\, \ln\frac{\Delta T'}{\Delta T''}} \ . \tag{5}$$

Ist die spezifische Wärmekapazität $c_{\mathrm{p}}$ des Fluids (20) nicht bekannt, so lassen sich die Funktionen A und B analog für die Kapazitätsströme $\dot{C}_{\mathrm{A}}$ und $\dot{C}_{\mathrm{B}}$ aufstellen.

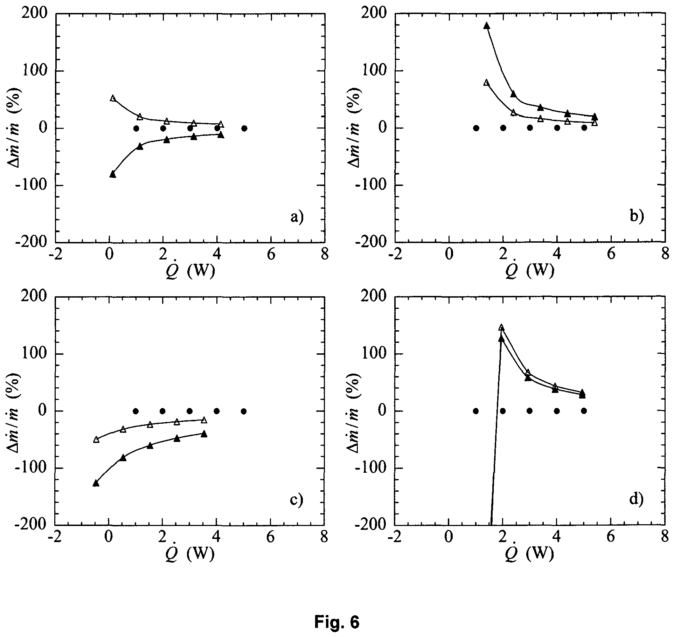

Die drei Messgrößen $\dot{Q}$, $\Delta T'$ und $\Delta T''$ sind generell mit systematischen Fehlern $F_{\dot{Q}}$, $F_{\Delta T'}$ und $F_{\Delta T''}$ behaftet. Die Ergebnisse für den Massenstrom nach Funktion A und nach Funktion B weichen deshalb ohne Korrektur der Messgrößen voneinander ab, d.h. es ergeben sich verschiedene systematische Effekte. Solche systematischen Effekte der Funktionen A und B sind beispielhaft in **Fig. 6** dargestellt. Darin sind die relativen Fehler der berechneten Massenströme in Bezug auf fehlerfreie Beispieldaten über der Heizleistung $\dot{Q}$ aufgetragen. Die in **Fig. 6** aufgeführten Daten sind in **Tab. 1** zusammengefasst. Die systematischen Effekte können hinsichtlich ihrer Vorzeichen eine gegensinnige Tendenz aufweisen (siehe **Fig. 6a),** oder gleichsinnige Tendenzen wie in **Fig. 6b** oder in **Fig. 6c.** Ebenso sind Unstetigkeiten der systematischen Effekte mit Vorzeichenwechsel möglich (siehe **Fig. 6d).** Die relativen Fehler der berechneten Massenströme sind dabei so groß, dass eine direkte Auswertung der Messgrößen i.d.R. ausgeschlossen ist.

**Tab. 1**

| ● Fehlerfreie Beispieldaten:<br>$\dot{m}$ = 0,001 kg/s, $\dot{Q}$ = {1,2,3,4,5} W, $T_{51}$ = 300 K, $c_{\mathrm{p}}$ = 4200 J/(kg K), $R$ = 0,3 K/W<br>▲ Massenstrom $\dot{m}_A$ nach Funktion A mit systematischen Fehlern<br>△ Massenstrom $\dot{m}_B$ nach Funktion B mit systematischen Fehlern | | | | |
|---|---|---|---|---|
| Systematische Fehler: | a) | b) | c) | d) |
| $F_{\dot{Q}}$ (W) | 0,868 | -0,387 | 1,446 | 0,061 |
| $F_{\Delta T'}$ (K) | 0,061 | 0,103 | -0,113 | 0,123 |
| $F_{\Delta T''}$ (K) | -0,026 | -0,017 | 0,082 | -0,150 |

Die beiden analytischen Funktionen A und B basieren ausschließlich auf den gleichen Variablen $\dot{Q}$, $\Delta T'$ und $\Delta T''$, sowie der spezifischen Wärmekapazität $c_{\mathrm{p}}$ des Fluids. Deshalb müssen die Ergebnisse der Funktionen A und B unter der Bedingung übereinstimmen, dass die drei Variablen der Funktionen frei von Fehlern sind. Entsprechende fehlerfreie Variablen können durch Subtraktion der systematischen Fehler $F_{\dot{Q}}$, $F_{\Delta T'}$ und $F_{\Delta T''}$ von den Messgrößen $\dot{Q}$, $\Delta T'$ und $\Delta T''$ gebildet werden (Der Einfluss statistischer Unsicherheiten wird später an einem Beispiel erläutert.). Der Parameter $F_{\dot{Q}}$ beinhaltet dabei nicht nur den eigentlichen systematischen Messfehler der Heizleistung $\dot{Q}$, sondern auch den Teil der Heizleistung, der an die Umgebung abfließt bzw. zusätzlich aus dieser aufgenommen wird. Mit den Gleichungen (4) und (5) gilt dann folgende physikalisch exakte Beziehung:

$$\dot{m}_{\mathrm{A}}\left(\dot{Q}-F_{\dot{Q}},\ \Delta T'-F_{\Delta T'},\ \Delta T''-F_{\Delta T''}\right) \overset{\text{def}}{=} \dot{m}_{\mathrm{B}}\left(\dot{Q}-F_{\dot{Q}},\ \Delta T'-F_{\Delta T'},\ \Delta T''-F_{\Delta T''}\right). \tag{6}$$

Auf der Basis von Gleichung (6) erfolgt die Bestimmung der Massen- oder Kapazitätsströme über eine intrinsische Kalibrierung der Vorrichtung nach den folgenden Verfahrensschritten:

a) Es wird eine Messreihe unter stationären Bedingungen durchgeführt, d.h. bei konstantem Massenstrom $\dot{m}$ und konstanter Fluidtemperatur (51), bei der die Heizleistung $\dot{Q}$ (40) vorzugsweise stufenweise verändert wird. Aus der Messreihe mit n Messpunkten erhält man i = 1... n Datensätze {$\dot{Q}_{\mathrm{i}}$, $\Delta T'_{\mathrm{i}}$, $\Delta T''_{\mathrm{i}}$}. Für die lineare Approximation des thermischen Widerstandes $R = f(\dot{Q}, \Delta T' - F_{\Delta T'}, \Delta T'' - F_{\Delta T''})$ werden n ≥ 2 Messpunkte benötigt. Mehr als 2 Messpunkte sind vorteilhaft, da über die Residuen der linearen Approximation Aussagen zur tatsächlichen Stabilität der Betriebsbedingungen während der Kalibrierung getroffen werden können.

b) Die n Datensätze werden den Funktionen A und B für den Massenstrom übergeben und analog zur Gleichung (6) mit den systematischen Fehlern $F_{\dot{Q}}$, $F_{\Delta T'}$ und $F_{\Delta T''}$ erweitert. Die so gebildeten Funktionen A und B werden zu einer gemeinsamen Datenmenge kombiniert.

c) Anschließend werden die systematischen Fehler $F_{\dot{Q}}$, $F_{\Delta T'}$ und $F_{\Delta T''}$ als freie Fitparameter einer Fitfunktion bestimmt, in der die Streuung, bevorzugt die Standardabweichung der Datenmenge minimiert wird. Mit dem so durchgeführten Fitting erhält man den konstanten Massen- oder Kapazitätsstrom der intrinsischen Kalibrierung. Das Ergebnis für den Kapazitätsstrom $\dot{C} = \dot{m}c_p$ hängt nur von statistischen Unsicherheiten ab, d.h. von Schwankungen des Kapazitätsstroms selbst und von Schwankungen der Messgrößen um ihre Mittelwerte. Die verbleibende Standardabweichung der 2 n Datenpunkte der Datenmenge ist ein direktes Maß für die Messunsicherheit der Kapazitätsstrommessung. Die Messunsicherheit des Massenstroms $\dot{m}$ ist zusätzlich von der Unsicherheit des Werts der spezifischen Wärmekapazität $c_p$ abhängig.

d) Als Ergebnis der Fitfunktion sind grundsätzlich beliebige Kombinationen der Fitparameter $F_{\dot{Q}}$, $F_{\Delta T'}$ und $F_{\Delta T''}$ möglich. Das liegt daran, dass das Gleichungssystem mit zwei Gleichungen und drei Unbekannten unterbestimmt ist. Für die gefittete Messreihe erhält man zwar den exakten Kapazitäts- bzw. Massenstrom; die Anwendung solcher beliebiger Kombinationen von Fitparametern im gesamten Messbereich der Vorrichtung hätte aber systematische Effekte wie in **Fig. 6** zur Folge. Dieser Umstand lässt sich ausnutzen, indem eine zweite Messreihe mit abweichendem Massenstrom herangezogen und die Fitfunktion mit den Daten beider Messreihen ausgeführt wird. Die Berücksichtigung der zweiten Messreihe kann dabei durch verschiedene mathematische Methoden erfolgen. Vorzugsweise ist die Erweiterung der Fitfunktion durch eine Randbedingung in Bezug auf die zweite Messreihe möglich oder die Standardabweichungen beider Messreihen können gleichzeitig minimiert werden. Dabei sind die systematischen Fehler $F_{\dot{Q}}$, $F_{\Delta T'}$ und $F_{\Delta T''}$ in beiden Messreihen und bei allen Messpunkten gleich. Die zweite Messreihe liefert so auf experimentelle Weise eine dritte unabhängige Funktion C der Fitfunktion, wodurch sich die systematischen Fehler $F_{\dot{Q}}$, $F_{\Delta T'}$ und $F_{\Delta T''}$ exakt bestimmen lassen.

e) Der Standardbetrieb einer Vorrichtung setzt die intrinsische Kalibrierung mit drei unabhängigen Beziehungen zur exakten Bestimmung der systematischen Fehler voraus. Der Massenstrom wird mit den von den systematischen Fehlern bereinigten Messgrößen aus der Energiebilanz des strömenden Fluids nach Funktion A berechnet. Die Messunsicherheit hängt neben den statistischen Unsicherheiten davon ab, inwieweit die systematischen Fehler im Messbereich des Sensors unverändert sind.

Eine mit einer zweiten Messreihe erweiterte Fitfunktion liefert für die in **Tab. 1** aufgeführten Beispieldaten die in **Tab. 2** zusammengefassten Genauigkeiten der systematischen Fehler $F_{\dot{Q}}$, $F_{\Delta T'}$ und $F_{\Delta T''}$. Setzt man diese Daten als verbleibende Fehler ein, um die Unsicherheit des Massenstroms nach Gleichung (4) und dem Fehlerfortpflanzungsgesetz zu berechnen, so erhält man für alle Beispieldaten Werte von $< 10^{-7}$ kg/s. Dieses Ergebnis führt zu folgenden Schlussfolgerungen:

- Im Vergleich zu thermischen Massenstromsensoren lassen sich die Vorrichtungen mit wesentlich kleineren Temperaturdifferenzen betreiben, wobei Temperaturdifferenzen des Fluids von $(\Delta T' - \Delta T'') < 1$ K möglich sind. Dadurch ist neben einer Massenstrommessung im Bypass insbesondere auch die Massenstrommessung direkt im Hauptstrom des Fluids möglich.
- Die Messunsicherheit der Vorrichtungen hängt nahezu ausschließlich von der Stabilität der Betriebsparameter während der intrinsischen Kalibrierung ab, sowie von der Stabilität und der Auflösung der drei Messgrößen. Die Genauigkeit der drei Messgrößen spielt keine Rolle.

**Tab. 2:**

| Genauigkeiten der systematischen Fehler für eine mit einer zweiten Messreihe erweiterte Fitfunktion unter Verwendung der Beispieldaten aus **Tab. 1**: $\dot{m} = 0{,}0018$ kg/s, $\dot{Q} = \{1, 2\}$ W, $T_{51} = 300$ K, $c_p = 4200$ J/(kg K), $R = 0{,}27$ K/W | | | | |
|---|---|---|---|---|
| | a) | b) | c) | d) |
| $F_{\dot{Q},\text{fit}} - F_{\dot{Q}}$ (W) | $2{,}8 \times 10^{-8}$ | $7{,}1 \times 10^{-6}$ | $1{,}2 \times 10^{-6}$ | $-1{,}8 \times 10^{-6}$ |
| $F_{\Delta T',\text{fit}} - F_{\Delta T'}$ (K) | $-7{,}5 \times 10^{-9}$ | $3{,}1 \times 10^{-6}$ | $3{,}8 \times 10^{-7}$ | $-6{,}6 \times 10^{-7}$ |
| $F_{\Delta T'',\text{fit}} - F_{\Delta T''}$ (K) | $-1{,}1 \times 10^{-8}$ | $1{,}4 \times 10^{-6}$ | $2{,}2 \times 10^{-7}$ | $-4{,}2 \times 10^{-7}$ |

Im erfindungsgemäßen Verfahren wurde davon ausgegangen, dass der Wärmeübergangskoeffizient $k$ und damit der thermische Widerstand $R$ bei konstantem Massenstrom m ebenfalls konstant sind. Diese Annahme trifft prinzipiell nur für Gasströmungen zu, während bei Flüssigkeitsströmungen der Einfluss der Wandtemperatur über das Viskositätsverhältnis zu berücksichtigen ist. Dieser Einfluss liegt jedoch nur im Bereich von $10^{-3}$ K$^{-1}$; er ist unter Berücksichtigung der notwendigen Temperaturänderungen innerhalb einer Messreihe vernachlässigbar.

Der Einsatz der kalibrierten systematischen Fehler im Standardbetrieb einer Vorrichtung setzt voraus, dass sich die systematischen Fehler bei unterschiedlichen Massenströmen nicht ändern. Das kann nur erreicht werden, wenn an der ersten Temperaturmessstelle (51) und an der zweiten Temperaturmessstelle (52) Temperaturdifferenzen infolge Eigenerwärmung der Temperatursensoren vernachlässigbar sind. Besonders vorteilhaft ist daher der Einsatz von Dampfdruckthermometern, Thermoelementen oder Thermosäulen zur Messung der Ein- und Austrittstemperaturdifferenzen $\Delta T'$ und $\Delta T''$, da bei diesen funktionsbedingt keine Eigenerwärmung auftritt. Während sich mit Dampfdruckthermometern eine Auflösung der Temperaturmessung im Millikelvin-Bereich erzielen lässt, ist die Auflösung von Thermoelementen bzw. Thermosäulen jedoch beschränkt. Alternativ dazu ist der Einsatz von Thermometern mit Eigenerwärmung, insbesondere von Widerstandsthermometern, nicht ausgeschlossen. Deren Betriebsparameter und die Größe der Kontaktflächen an den beiden Temperaturmessstellen (51, 52) müssen jedoch so aufeinander abgestimmt werden, dass der Einfluss der Eigenerwärmung vernachlässigbar ist.

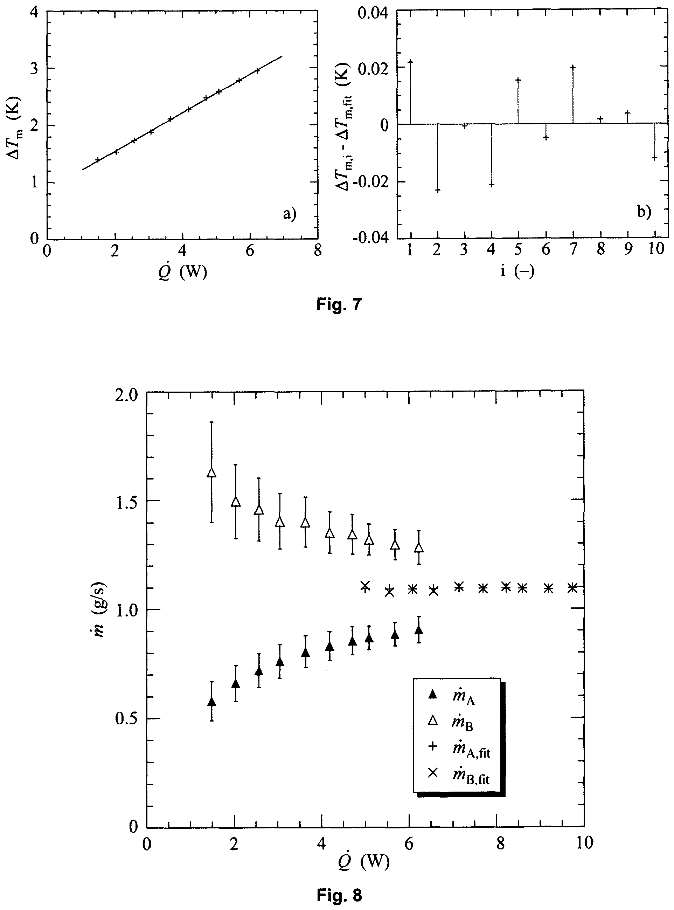

In **Fig. 7** und **Fig. 8** sind Messergebnisse einer Vorrichtung in einer Ausführung gemäß **Fig. 2b)** dargestellt. Die konstante Oberflächentemperatur (33) des Wärmeübertragers (30) wurde hier durch kondensierendes Neon erreicht. Neben einem statischen Anteil wurde dem Neon die variable Heizleistung $\dot{Q}$ (40) elektrisch zugeführt. Die Wärmeabfuhr erfolgte durch gasförmiges Helium in der Leitung (10), dessen Massenstrom $\dot{m}$ ermittelt wurde. Die Temperaturen des Heliums an den beiden Temperaturmessstellen (51, 52) wurden mit TVO-Sensoren auf der Leitung (10) gemessen. Der Begriff *TVO-Sensor* bezeichnet eine Art von Widerstandsthermometern, die bevorzugt bei tiefen Temperaturen eingesetzt werden. Die thermischen Kontaktflächen zwischen den TVO-Sensoren und der Leitung (10) waren so groß, dass der Effekt der Eigenerwärmung vernachlässigbar war. Die Temperatur des gesättigten Neons an der dritten Temperaturmessstelle (53) wurde über die Dampfdruckkurve aus dem gemessenen Sättigungsdruck des Neons bestimmt.

Unter stationären Bedingungen wurden 10 Messpunkte bei variabler Heizleistung $\dot{Q}$ aufgenommen. Bei jedem der 10 Messpunkte wurden über einen Zeitraum von 30 min jeweils ca. 1000 Messdaten aufgezeichnet, aus denen die Mittelwerte und die Standardabweichungen der Messgrößen berechnet wurden. In **Fig. 7a)** ist die Linearität der Messdaten in der Form $\Delta T_m = f(\dot{Q})$ zur Bestimmung des thermischen Widerstands $R$ dargestellt. **Fig. 7b)** zeigt die Residuen der 10 Messpunkte in Bezug auf die Regressionsgerade.

Die systematischen Effekte der Funktionen A und B unter Verwendung der Mittelwerte der Messgrößen sind in **Fig. 8** als $\dot{m}_A$ und $\dot{m}_B$ angegeben. Die Fehlerbalken kennzeichnen die statistischen Anteile der kombinierten Standardunsicherheiten, resultierend aus einer Typ-A-Auswertung gemäß ISO/IEC Guide 98-3:2008. Bezogen auf die berechneten Massenströme lagen die statistischen Anteile der kombinierten Standardunsicherheiten in einem Bereich von $u_{\dot{m}}$ = 6 ... 16%.

Die Ergebnisse der berechneten Massenströme unter Anwendung der Verfahrensschritte a) bis c) sind in **Fig. 8** mit $\dot{m}_{A,fit}$ und $\dot{m}_{B,fit}$ gekennzeichnet. Wären die Messungen frei von statistischen Unsicherheiten; so müsste nach der Korrektur der systematischen Fehler gemäß Gleichung (6) jeder Messpunkt $\dot{m}_{A,fit}$ (+) mit dem jeweils dazugehörigen Messpunkt $\dot{m}_{B,fit}$ ($\times$) exakt übereinstimmen. Außerdem würden alle Messpunkte genau auf einer horizontalen Linie liegen. Die Abweichungen von dieser theoretischen Übereinstimmung sind somit ein direktes Maß für die übrigen Fehleranteile, d.h. für die statistischen Unsicherheiten der Messung. Das bedeutet, dass die Standardunsicherheit des durch die Fitfunktion bestimmten Massenstroms gleich der verbleibenden Standardabweichung der Datenmenge ist. Aus den Messdaten wurde ein mittlerer Massenstrom von $\dot{m}_{fit}$ = 1,095 $\pm$ 0,0065 g/s berechnet. Dieses Ergebnis entspricht einer relativen Standardunsicherheit der Massenstrommessung von $u_{\dot{m},fit}$ = 0,6 %. Durch das erfindungsgemäße Verfahren wurden also nicht nur die systematischen Fehler der Massenstrommessung korrigiert, sondern auch die statistische Unsicherheit um mehr als eine Größenordnung verringert. Die geringe Messunsicherheit von 0,6 % ließ sich bereits mit einer standardmäßigen Prozessmesstechnik für die Temperatur-, Druck- und Leistungsmessung erreichen, die nicht speziell für die Anforderungen der erfindungsgemäßen Vorrichtung optimiert war.

Das erfindungsgemäße Verfahren, dass auf zwei unabhängigen analytischen Beziehungen und einer unabhängigen experimentellen Beziehung für die Bestimmung der systematischen Fehler dreier Messgrößen beruht, lässt sich prinzipiell um zusätzliche Messgrößen $Y_i$ und zugehörige Fehlerparametern $F_{Y_i}$ erweitern. Zur Bestimmung der Fehlerparameter $F_{Y_i}$ werden dann i zusätzliche unabhängige Beziehungen benötigt, die wiederum experimentell bereitgestellt werden können.

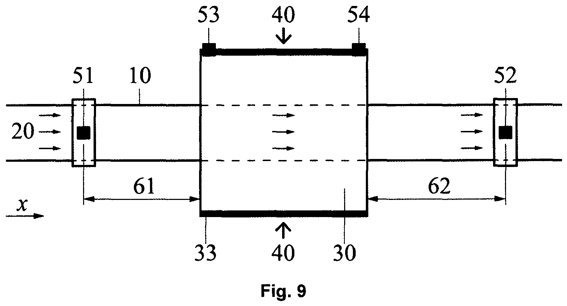

In einer ersten Ausführung für die Modellerweiterung ist eine zusätzliche Temperaturmessstelle (54) für die Oberflächentemperatur des Wärmeübertragers (30) gemäß **Fig. 9.** vorgesehen. In dieser Ausgestaltung werden die Eintrittstemperaturdifferenz $\Delta T'$ und die Austrittstemperaturdifferenz $\Delta T''$ getrennt gemessen. Für die Bestimmung der Fehlerparameter ist dann eine dritte Messreihe bei von der ersten und der zweiten Messreihe verschiedenem Massenstrom erforderlich.

In einer zweiten Ausführung für die Modellerweiterung ist eine zusätzliche Temperaturmessstelle am Gehäuse der Vorrichtung vorgesehen, um den Einfluss der Umgebungstemperatur und damit eine mögliche Änderung des Fehlerparameters $F_{\dot{Q}}$ zu berücksichtigen. In diesem Fall ist zur Bestimmung der systematischen Fehler eine zusätzliche Messreihe bei variabler Gehäusetemperatur erforderlich.

**EP 2 791 629 B1**

**Patentansprüche**

1.  Verfahren zur Bestimmung eines Massenstroms eines Fluids (20), mit den Schritten:

    a) Aufnehmen einer Messreihe $\{\dot{Q}_i, \Delta T_i, \Delta T''_i\}_{i=1...n}$ mit n ≥ 2 Messpunkten bei einem ersten konstanten Massenstrom und konstanter Temperatur des Fluids (20) an einer ersten Temperaturmessstelle (51), wobei dem Fluid (20) bei jedem Messpunkt mittels eines Wärmeübertragers (30) eine Heizleistung $\dot{Q}$ (40) aufgebracht wird, die in Bezug zu den vorherigen Messpunkten verändert wurde, wobei $\Delta T$ die Temperaturdifferenz zwischen einer dritten Temperaturmessstelle (53) und einer ersten Temperaturmessstelle (51) und $\Delta T''$ die Temperaturdifferenz zwischen der dritten Temperaturmessstelle (53) und einer zweiten Temperaturmessstelle (52) ist, wobei die erste Temperaturmessstelle (51) stromaufwärts in Bezug auf den Wärmeübertrager (30) und die zweite Temperaturmessstelle (52) stromabwärts in Bezug auf den Wärmeübertrager (30) angeordnet ist und der Wärmeübertrager (30) eine in Strömungsrichtung konstante Oberflächentemperatur (33) aufweist, die mittels der dritten Temperaturmessstelle (53) erfassbar ist;
    b) Erweitern durch Addition der Größen $\dot{Q}$, $\Delta T$ und $\Delta T''$ der aufgenommenen Messreihe $\{\dot{Q}_i, \Delta T_i, \Delta T''_i\}_{i=1...n}$ mit jeweiligen systematischen Fehlern $F_{\dot{Q}}$, $F_{\Delta T}$ und $F_{\Delta T''}$ und Einsetzen der erweiterten Messreihe sowohl in eine erste Funktion A als auch in eine zweite, von der Funktion A verschiedene Funktion B, die beide ausschließlich dieselben Größen $\dot{Q}$, $\Delta T$ und $\Delta T''$ sowie die spezifische Wärmekapazität $c_p$ des Fluids (20) verknüpfen, wobei als erste Funktion A für den Massenstrom die Funktion

    $$\dot{m}_A(\dot{Q}, \Delta T', \Delta T'') := \frac{\dot{Q}}{c_p(\Delta T' - \Delta T'')} \, .$$

    und als zweite Funktion B für den Massenstrom die weitere Funktion

    $$\dot{m}_B(\dot{Q}, \Delta T', \Delta T'') := \frac{1}{R(\dot{Q},\Delta T',\Delta T'') \, c_p \, \ln\frac{\Delta T'}{\Delta T''}} \text{ mit } R = f(\dot{Q}, \Delta T', \Delta T'')$$

    gewählt wird, wobei $R$ der Anstieg der Funktion $\Delta T_m = \frac{\Delta T' - \Delta T''}{\ln\frac{\Delta T'}{\Delta T''}} = f(\dot{Q})$ ist, der durch lineare Approximation der Messreihe bestimmt wird, und $\ln\frac{\Delta T'}{\Delta T''}$ den natürlichen Logarithmus des Quotienten aus $\Delta T$ und $\Delta T''$ bezeichnet, und Kombinieren der Ergebnisse der ersten Funktion A und der Ergebnisse der zweiten Funktion B zu einer gemeinsamen Datenmenge;
    c) Variieren der systematischen Fehler $F_{\dot{Q}}$, $F_{\Delta T}$ und $F_{\Delta T''}$ als freie Fitparameter durch Anwenden einer Fitfunktion, in der die Streuung der gemeinsamen Datenmenge minimiert wird, wodurch die Fitfunktion einen Wert für den konstanten Massenstrom m liefert.

2.  Verfahren nach Anspruch 1, mit den weiteren Schritten

    d) Erweitern der Fitfunktion mit einer dritten Funktion C, die eine sowohl von der Funktion A als auch von der Funktion B unabhängige Beziehung darstellt, und Bestimmen der exakten Werte für die systematischen Fehler $F_{\dot{Q}}$, $F_{\Delta T'}$ und $F_{\Delta T''}$;
    e) Bestimmen des Wertes für den Massenstrom unmittelbar aus den Messgrößen $\dot{Q}$, $\Delta T$ und $\Delta T''$ unter jeweiligem Abzug der in Schritt d) bestimmten systematischen Fehler $F_{\dot{Q}}$, $F_{\Delta T'}$ und $F_{\Delta T''}$ und unter Anwendung der ersten Funktion A.

3.  Verfahren nach Anspruch 42, wobei für die Funktion C eine zweite Messreihe mit einem zweiten, vom ersten konstanten Massenstrom verschiedenen konstanten Massenstrom herangezogen und in eine zweite Funktion A und/oder in eine zweite Funktion B eingesetzt wird.

4.  Verfahren nach Anspruch 3, wobei für einen Bereich der Verwendung einer Vorrichtung nach den Ansprüchen 5

11

bis 14 Kennlinien und/oder Kennfelder erstellt werden, die sich auf intrinsische Kalibrierungen gemäß den Verfahrensschritten a) bis c) bei jeweils unterschiedlich gewählten Betriebsbedingungen stützen.

5. Verwendung einer Vorrichtung zur Durchführung eines Verfahrens nach einem der vorgenannten Ansprüche zur Bestimmung des Massenstroms eines Fluids (20), die Vorrichtung aufweisend eine Leitung (10) zur Führung des Fluids (20) in Strömungsrichtung zu einem Kontakt mit einem Wärmeübertrager (30), wobei stromaufwärts in Bezug auf den Wärmeübertrager (30) eine erste Temperaturmessstelle (51) zur Bestimmung einer ersten Fluidtemperatur, und stromabwärts in Bezug auf den Wärmeübertrager (30) eine zweite Temperaturmessstelle (52) zur Bestimmung einer zweiten Fluidtemperatur angeordnet ist, **dadurch gekennzeichnet, dass** der Wärmeübertrager (30) eine in Strömungsrichtung konstante Oberflächentemperatur (33) aufweist, die mittels einer dritten Temperaturmessstelle (53) erfassbar ist.

6. Verwendung nach Anspruch 5 , **dadurch gekennzeichnet, dass** eine regelbare Einrichtung zur Zuführung einer Heizleistung (40) auf den Wärmeübertrager (30) vorgesehen ist.

7. Verwendung nach Anspruch 5 oder 6, **dadurch gekennzeichnet, dass** der Wärmeübertrager (30) die Leitung (10) umgibt oder die Leitung (10) den Wärmeübertrager (30) umgibt oder der Wärmeübertrager (30) im Inneren der Leitung (10) eingebracht ist.

8. Verwendung nach einem der Ansprüche 5 bis 7, **dadurch gekennzeichnet, dass** die erste Temperaturmessstelle (51) und die zweite Temperaturmessstelle (52) nicht im selben Abstand (61, 62) vom Wärmeübertrager (30) angeordnet sind.

9. Verwendung nach einem der Ansprüche 5 bis 8, **dadurch gekennzeichnet, dass** die erste Temperaturmessstelle (51) mit einem ersten Kontaktelement (11) und/oder die zweite Temperaturmessstelle (52) mit einem zweiten Kontaktelement (12) verbunden sind, wobei das erste Kontaktelement (11) stromaufwärts in Bezug auf den Wärmeübertrager (30) die Leitung (10) umgibt und/oder das zweite Kontaktelement (12) stromabwärts in Bezug auf den Wärmeübertrager (30) die Leitung (10) umgibt.

10. Verwendung nach einem der Ansprüche 5 bis 9, **dadurch gekennzeichnet, dass** auf der Oberfläche des Wärmeübertragers (30) zusätzlich zur dritten Temperaturmessstelle (53) eine vierte Temperaturmessstelle (54) vorgesehen ist.

11. Verwendung nach einem der Ansprüche 5 bis 10, **dadurch gekennzeichnet, dass** die Temperaturdifferenz $\Delta T'$ zwischen der dritten Temperaturmessstelle (53) und der ersten Temperaturmessstelle (51) und/oder die Temperaturdifferenz $\Delta T''$ zwischen der dritten Temperaturmessstelle (53) und der zweiten Temperaturmessstelle (52) mittels eines Thermoelements oder einer Thermosäule oder mittels einer Differenzmessung zwischen Widerstandsthermometern (53, 51; 53, 52) erfasst wird.

12. Verwendung nach einem der Ansprüche 5 bis 11, **dadurch gekennzeichnet, dass** der Wärmeübertrager (30) über ein geschlossenes Volumen verfügt, das mit einem gesättigten Medium (70) befüllt ist, dass sich im Phasengleichgewicht aus siedender Flüssigkeit (71) und gesättigten Dampf (72) befindet, wodurch die in Strömungsrichtung konstante Oberflächentemperatur (33) über die Sättigungstemperatur des auf der Oberfläche der Leitung kondensierenden Mediums (73) erreicht wird und im Gleichgewichtszustand die Menge an kondensiertem Medium (73) durch eine mit einem Heizer zugeführte (40) Wärme wieder verdampft wird.

13. Verwendung nach Anspruch 12 **dadurch gekennzeichnet, dass** die dritte Temperaturmessstelle (53) über die Dampfdruckkurve und den Dampfdruck des Mediums (70) in dem Wärmeübertrager (30) die konstante Oberflächentemperatur (33) misst, und/oder die erste Temperaturmessstelle (51) und/oder die zweite Temperaturmessstelle (52) als Dampfdruckthermometer ausgeführt sind, die mit demselben Medium (70) wie der Wärmeübertrager (30) befüllt sind, so dass die Temperaturdifferenz $\Delta T'$ zwischen der dritten Temperaturmessstelle (53) und der ersten Temperaturmessstelle (51) und die Temperaturdifferenz $\Delta T''$ zwischen der dritten Temperaturmessstelle (53) und der zweiten Temperaturmessstelle (52) mittels einer Druckmessung (53, 51; 53, 52) oder mittels einer Differenzdruckmessung (54, 55) erfasst wird.

14. Verwendung nach einem der Ansprüche 5 bis 13, **dadurch gekennzeichnet, dass** die Leitung (10) zur Führung des Fluids (20) einen Hauptstrom des Fluids (20) darstellt oder einen Bypass, in dem nur ein Teil des Hauptstrom des Fluids (20) geführt wird.

**Claims**

1. Method for determining the mass-flow of a fluid (20) comprising the steps:

    a) recording a series of measurements $\{Q_i, \Delta T_i, \Delta T''_i\}_{i=1\ldots n}$ where n $\geq$ 2 measuring points with a first constant mass-flow and constant temperature of the fluid (20) at a first temperature measuring point (51), wherein a heating effect Q (40) is applied to the fluid (20) at each measuring point by means of a heat transfer element (30), the heating effect being changed in relation to the preceding measuring points, wherein $\Delta T$ is the temperature difference between a third temperature measuring point (53) and a first temperature measuring point (51), and $\Delta T''$ is the temperature difference between the third temperature measuring point (53) and a second temperature measuring point (52), wherein the first temperature measuring point (51) is arranged upstream in relation to the heat transfer element (30) and the second temperature measuring point (52) is arranged downstream in relation to the heat transfer element (30), and the heat transfer element (30) exhibits a constant surface temperature (33) in the direction of flow, which can be detected by means of the third temperature measuring point (53);
    b) extending by the addition of the values Q, $\Delta T$, and $\Delta T''$ of the recorded series of measurements $\{Q_i, \Delta T_i, \Delta T''_i\}_{i=1\ldots n}$ with in each case systematic errors $F_Q$, $F_{\Delta T'}$, and $F_{\Delta T''}$ and introduction of the extended series of measurements into both a first function A as well as into a second function B, different from the function A, both of which exclusively link the same values Q, $\Delta T$, and $\Delta T''$ and the specific heat capacity $c_p$ of the fluid (20), wherein, as the first function A for the mass-flow, the function

$$\dot{m}_A(\dot{Q}, \Delta T', \Delta T'') := \frac{\dot{Q}}{c_p(\Delta T' - \Delta T'')}.$$

    is selected, and as the second function B for the mass-flow the further function

$$\dot{m}_B(\dot{Q}, \Delta T', \Delta T'') := \frac{1}{R(\dot{Q}, \Delta T', \Delta T'')\, c_p\, \ln\frac{\Delta T'}{\Delta T''}} \quad \text{with} \quad R = f(\dot{Q}, \Delta T', \Delta T'')$$

    wherein $R$ is the rise of the function $\Delta T_m = \frac{\Delta T' - \Delta T''}{\ln\frac{\Delta T'}{\Delta T''}} = f(\dot{Q})$ which is determined by linear approximation of the series of measurements, and $\ln\frac{\Delta T'}{\Delta T''}$ designates the natural logarithm of the quotient from $\Delta T$ and $\Delta T''$, and by combining the results from the first function A and the results of the second function B to a common data quantity;
    c) varying the systematic errors $F_Q$, $F_{\Delta T'}$, and $F_{\Delta T''}$ as free fit parameters by the use of a fit function, in which the scatter of the common data quantity is minimised, as a result of which the fit function supplies a value for the constant mass-flow $m$.

2. Method according to claim 1, further comprising the steps of:

    d) extension of the fit function by a third function C, which exhibits an independent relationship both to the function A as well as to the function B, and determination of the exact values for the systematic errors $F_Q$, $F_{\Delta T'}$, and $F_{\Delta T''}$,
    e) determination of the value for the mass-flow directly from the measured values Q, $\Delta T$, and $\Delta T''$ with the deduction in each case of the systematic errors $F_Q$, $F_{\Delta T}$, and $F_{\Delta T}''$ determined in step d) and with the application of the first function A.

3. Method according to claim 2, wherein, for the function C, a second series of measurements is drawn on, with a second constant mass-flow different from the first constant mass flow, and is inserted into a second function A and/or into a second function B.

4. Method according to claim 3, wherein, for a range of the use of a device according to claims 5 to 14, characteristic curves and/or families of characteristics are produced, which are based on intrinsic calibrations in accordance with the method steps a) to c) with in each case differently-selected operating conditions.

**5.** Use of a device for carrying out a method according to any one of the preceding claims for determining the mass-flow of a fluid (20), the device comprising a line (10) for conveying the fluid (20) in the direction of flow to a contact with a heat transfer element (30), wherein arranged upstream in relation to the heat transfer element (30) is a first temperature measuring point (51) for determining a first fluid temperature, and arranged downstream in relation to the heat transfer element (30) is a second temperature measuring point (52) for determining a second fluid temperature, **characterised in that** the heat transfer element (30) exhibits a constant surface temperature (33) in the direction of flow, which can be detected by means of a third temperature measuring point (53).

**6.** Use according to claim 5, **characterised in that** a regulatable device is provided for the conducting of a heating effect (40) onto the heat transfer element (30).

**7.** Use according to claim 5 or 6, **characterised in that** the heat transfer element (30) surrounds the line (10), or the line (10) surrounds the heat transfer element (30), or the heat transfer element (30) is located in the interior of the line (10).

**8.** Use according to any one of claims 5 to 7, **characterised in that** the first temperature measuring point (51) and the second temperature measuring point (52) are not arranged at the same distance interval (61, 62) from the heat transfer element (30).

**9.** Use according to any one of claims 5 to 8, **characterised in that** the first temperature measuring point (51) is connected to a first contact element (11) and/or the second temperature measuring point (52) is connected to a second contact element (12), wherein the first contact element (11) surrounds the line (10) upstream in relation to the heat transfer element (30) and/or the second contact element (12) surrounds the line (10) downstream in relation to the heat transfer element (30).

**10.** Use according to any one of claims 5 to 9, **characterised in that**, in addition to the third temperature measuring point (53), a fourth temperature measuring point (54) is provided on the surface of the heat transfer element (30).

**11.** Use according to any one of claims 5 to 10, **characterized in that** the temperature difference $\Delta T'$ between the third temperature measuring point (53) and the first temperature measuring point (51) and/or the temperature difference $\Delta T''$ between the third temperature measuring point (53) and the second temperature measuring point (52) is detected by means of a thermocouple or a thermopile, or by means of a differential measurement between resistance thermometers (53, 51; 53, 52).

**12.** Use according to any one of claims 5 to 11, **characterised in that** the heat transfer element (30) has a closed volume, which is filled with a saturated medium (70), which is in the phase equilibrium of boiling fluid (71) and saturated vapour (72), as a result of which the surface temperature (33), constant in the direction of flow, is attained by way of the saturation temperature of the medium (73) condensing on the surface of the line, and, in the state of equilibrium, the quantity of condensed medium (73) is evaporated again by heat applied by a heater (40).

**13.** Use according to claim 12, **characterised in that** the third temperature measuring point (53) measures the constant surface temperature (33) over the vapour pressure curve and the vapour pressure of the medium (70) in the heat transfer element (30), and/or the first temperature measuring point (51) and/or the second temperature measuring point (52) are configured as vapour pressure thermometers, which are filled with the same medium (70) as the heat transfer element (30), such that the temperature difference $\Delta T'$ between the third temperature measuring point (53) and the first temperature measuring point (51) and/or the temperature difference $\Delta T''$ between the third temperature measuring point (53) and the second temperature measuring point (52) is detected by means of a pressure measurement (53, 51; 53, 52) or by means of a differential pressure measurement (54, 55).

**14.** Use according to any one of claims 5 to 13, **characterised in that** the line (10) for conveying the fluid (20) represents a main flow of the fluid (20) or a bypass, in which only a part of the main flow of the fluid (20) is conveyed.

**Revendications**

**1.** Procédé permettant de déterminer le débit massique d'un fluide 20) comprenant des étapes consistant à :

(a) recueillir une série de mesures $\{Q_i, \Delta T'_i, \Delta T''_i\}_{i=1...n}$ avec n≥2 point de mesure pour un premier débit massique constant et une température constante du fluide (20) au niveau d'un premier emplacement de mesure de la température (51), pour chaque point de mesure étant appliquée au fluide, au moyen d'un échangeur de chaleur (30), une puissance calorifique Q(40) qui a été modifiée par rapport aux points de mesure préalables, $\Delta T'$ représentant la différence de température entre un troisième emplacement de mesure de la température (53) et un premier emplacement de mesure de la température (51), et $\Delta T''$ représentant la différence de température entre le troisième emplacement de mesure de la température (53) et un second emplacement de mesure de la température (52), le premier emplacement de mesure de la température (51) étant situé en amont par rapport à l'échangeur de chaleur (30) et le second emplacement de mesure de la température (52) étant situé en aval par rapport à l'échangeur de chaleur (30), et l'échangeur de chaleur (30) ayant une température de surface (33) constante dans la direction de circulation, qui peut être mesurée par l'intermédiaire du troisième emplacement de mesure de la température (53) ;

(b) élargir par addition des grandeurs $Q, \Delta T'$ et $\Delta T''$ la série de mesures recueillie $\{\dot{Q}_i, \Delta T'_i, \Delta T''_i\}_{i=1...n}$ avec des erreurs cumulées respectives $F_{\dot{Q}}$, $F_{\Delta T'}$ et $F_{\Delta T''}$ et insérer la série de mesures élargie dans une première fonction A et également dans une seconde fonction B différente de la fonction A qui, toutes deux, lient exclusivement les grandeurs $\dot{Q}, \Delta T'$ et $\Delta T''$ ainsi que la capacité calorifique $c_p$ du fluide 20, en tant que première fonction A pour le débit massique étant sélectionnée la fonction :

$$\dot{m}_A(\dot{Q}, \Delta T', \Delta T'') := \frac{\dot{Q}}{c_p(\Delta T' - \Delta T'')} .$$

et en tant que seconde fonction B pour le débit massique étant sélectionnée l'autre fonction :

$$\dot{m}_B(\dot{Q}, \Delta T', \Delta T'') := \frac{1}{R(\dot{Q}, \Delta T', \Delta T'')c_p \, In\frac{\Delta T'}{\Delta T''}} \text{ avec } R = f\big((\dot{Q}, \Delta T', \Delta T'')$$

R représentant la pente de la fonction $\Delta T_m = \dfrac{\Delta T' - \Delta T''}{In\frac{\Delta T'}{\Delta T''}} = f(\dot{Q})$ qui est déterminée par approximation linéaire de la série de mesures, et $In\dfrac{\Delta T'}{\Delta T''}$ représentant le logarithme naturel du quotient de $\Delta T'$ et $\Delta T''$, et combiner

les résultats de la première fonction A et de la seconde fonction B pour obtenir un ensemble de données commun,

(c) faire varier l'erreur cumulée $F_{\dot{Q}}$, $F_{\Delta T'}$ et $F_{\Delta T''}$ en tant que paramètre d'ajustement libre en utilisant une fonction d'ajustement dans laquelle la dispersion de l'ensemble de données commun est minimisée, la fonction d'ajustement fournissant ainsi une valeur du débit massique constant $\dot{m}$.

2. Procédé conforme à la revendication 1, comprenant d'autres étapes consistant à :

d) élargir la fonction d'ajustement par une troisième fonction C qui représente une relation indépendante de la fonction A et également de la fonction B et déterminer les valeurs exactes de l'erreur cumulée $F_{\dot{Q}}, F_{\Delta T'}$ et $F_{\Delta T''}$,

e) déterminer la valeur du débit massique directement à partir des grandeurs de mesure $Q,$ $\Delta T'$ et $,\Delta T''$ en retranchant respectivement l'erreur cumulée $F_{\dot{Q}}$, $F_{\Delta T'}$ et $F_{\Delta T''}$ déterminée dans l'étape d) et en utilisant la première fonction A.

3. Procédé conforme à la revendication 2, selon lequel pour la fonction C on utilise une seconde série de mesures avec un débit massique constant différent du premier débit massique constant et on l'introduit dans une seconde fonction A et/ou dans une seconde fonction B.

4. Procédé conforme à la revendication 3,
selon lequel pour une plage d'utilisation d'un dispositif conforme aux revendications 5 à 14, on établit des lignes de caractéristiques et/ou des champs de caractéristiques qui s'appuient sur des calibrages intrinsèques conformes aux étapes de procédé a) à c) pour différentes conditions de fonctionnement sélectives.

5. Utilisation d'un dispositif permettant la mise en oeuvre du procédé conforme à l'une des revendications précédentes, permettant de déterminer le débit massique d'un fluide (20), ce dispositif comprenant une conduite (10) de transfert du fluide (20) dans une direction de circulation de sorte qu'il vienne en contact avec un échangeur de chaleur (30), en amont duquel est situé un premier emplacement de mesure de la température (51) permettant de déterminer une première température du fluide, et en aval duquel est situé un second emplacement de mesure de la température (52) permettant de déterminer une seconde température du fluide,
**caractérisée en ce que**
l'échangeur de chaleur (30) a une température de surface (33) constante dans la direction de circulation qui peut être détectée par l'intermédiaire d'un troisième emplacement de mesure de la température (53).

6. Utilisation conforme à la revendication 5,
**caractérisée en ce qu'**
il est prévu un dispositif réglable permettant de fournir une puissance calorifique (40) à l'échangeur de chaleur (30).

7. Utilisation conforme à la revendication 5 ou 6,
**caractérisée en ce que**
l'échangeur de chaleur (30) entoure la conduite (10) ou la conduite (10) entoure l'échangeur de chaleur (30) ou l'échangeur de chaleur (30) est monté à la partie interne de la conduite (10).

8. Utilisation conforme à l'une des revendications 1 à 7,
**caractérisée en ce que**
le premier emplacement de mesure de la température (51) et le second emplacement de mesure de la température (52) ne sont pas situés à la même distance (61, 62) de l'échangeur de chaleur (30).

9. Utilisation conforme à l'une des revendications 5 à 8,
**caractérisée en ce que**
le premier emplacement de mesure de la température (51) est relié à un premier élément de contact (11) et/ou le second emplacement de mesure de la température (52) est relié à un second élément de contact (12), et le premier élément de contact (11) entoure la conduite (10) en amont de l'échangeur de chaleur (30) et/ou le second élément de contact (12) entoure la conduite (10) en aval de l'échangeur de chaleur (30).

10. Utilisation conforme à l'une des revendications 5 à 9,
**caractérisée en ce que**
sur la surface de l'échangeur de chaleur (30) il est prévu un quatrième emplacement de mesure de la température (54) en plus du troisième emplacement de mesure de la température (53).

11. Utilisation conforme à l'une des revendications 5 à 10,
**caractérisée en ce que**
l'on détecte la différence de température $\Delta T'$ entre le troisième emplacement de mesure de la température (53) et le premier emplacement de mesure de la température (51) et/ou la différence de température $\Delta T''$ entre le troisième emplacement de mesure de la température (53) et le second emplacement de mesure de la température (52) au moyen d'un thermo-élément ou d'une thermopile ou par une mesure différentielle entre des thermomètres à résistance (53, 51, 53, 52).

12. Utilisation conforme à l'une des revendications 5 à 11,
**caractérisée en ce que**
l'échangeur de chaleur (30) dispose d'un volume fermé qui est rempli d'un fluide saturé (70) en équilibre de phase entre un liquide en ébullition (71) et une vapeur saturée (72) de sorte que la température de surface constante (33) dans la direction de circulation soit obtenue par la température de saturation du fluide se condensant sur la surface de la conduite, et qu'à l'état d'équilibre la quantité de fluide (73) condensée soit à nouveau vaporisée par de la chaleur transférée par un élément de chauffage (40).

13. Utilisation conforme à la revendication 12,
**caractérisée en ce que**
le troisième emplacement de mesure de la température (53) mesure la température de surface constante (33) par l'intermédiaire de la courbe de pression de vapeur et de la pression de vapeur du fluide (70) dans l'échangeur de chaleur (30), et/ou le premier emplacement de mesure de la température (51) et/ou le second emplacement de mesure de la température (52) est (sont) réalisé(s) sous la forme de thermomètre(s) à pression de vapeur rempli(s) avec le même fluide (70) que l'échangeur de chaleur (30) de sorte que la différence de température $\Delta T'$ entre le

troisième emplacement de mesure de la température (53) et le premier emplacement de mesure de la température (51) et la différence de température ΔT" entre le troisième emplacement de mesure de la température (53) et le second emplacement de mesure de la température (52) soient détectés par une mesure de pression (53, 51, 53, 52) ou une mesure de pression différentielle (54, 55).

14. Utilisation conforme à l'une des revendications 5 à 13,
**caractérisée en ce que**
la conduite (10) de transfert du fluide (20) correspond à une conduite de circulation du flux principal du fluide (20) ou à une conduite de dérivation dans laquelle n'est transférée qu'une partie du flux principal du fluide (20).

Fig. 1 (Stand der Technik)

Fig. 2

Fig. 3

Fig. 4

Fig. 5

**Fig. 6**

**Fig. 7**

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4517838 A
- US 5347861 A
- US 5373737 A
- EP 0395126 A1
- US 7895888 B2
- EP 0137687 A1
- DE 4324040 A1
- US 7197953 B2
- WO 2007063407 A2
- WO 0114839 A1
- DE 68903678 T2
- US 4817427 A
- US 4972707 A

**In der Beschreibung aufgeführte Nicht-Patentliteratur**

- **J. H. HUIJSING et al.** Thermal mass-flow meter. *J. Phys. E,* 1988, vol. 21, 994-997